# EUROPEAN PATENT SPECIFICATION

(11) **EP 3 055 455 B1**
(45) Date of publication and mention of the grant of the patent: **21.07.2021**
(21) Application number: 14852484.6
(22) Date of filing: 02.10.2014
(51) Int. Cl.: D21H 19/38, D21H 19/82, C09D 1/00, D21H 13/36, D21H 17/01

(54) **A PROCESS FOR PRODUCING A WEB-FORMED COMPOSITE AND A WEB-FORMED COMPOSITE**
VERFAHREN ZUR HERSTELLUNG EINES BAHNFÖRMIGEN VERBUNDSTOFFES UND EIN BAHNFÖRMIGES VERBUNDSTOFF
PROCÉDÉ DE PRODUCTION D'UN COMPOSITE EN FORME DE BANDE ET UN COMPOSITE EN FORME DE BANDE

(30) Priority: 09.10.2013 SE 1351190
(43) Date of publication of application: 17.08.2016
(73) Proprietor: Stora Enso Oyj, 00101 Helsinki (FI)
(72) Inventor: EITZE, Stefan, 25436 Uetersen (DE); GRUSSENMEYER, Heiner, 42781 Haan (DE); PFITZNER, Thomas, 76297 Stutensee-Blankenloch (DE)
(74) Representative: Steinrud, Henrik
(86) International application number: PCT/IB2014/065019
(87) International publication number: WO 2015/052622

(56) References cited:
- EP-A1- 0 337 771
- WO-A1-2004/030917
- WO-A2-2012/062424
- WO-A2-2012/066308
- JP-A- 2007 197 888
- US-A- 4 383 890
- US-A- 5 145 811
- US-A- 5 749 958
- US-A- 5 885 340
- US-A- 5 989 736
- US-A1- 2004 003 742
- US-A1- 2009 011 208
- US-B1- 6 740 373
- RAMBO, C.: 'Manufacturing of cellular â-SiAION/â-SiC composite ceramics from cardboard' J. MATER. SCI. vol. 41, no. 11, 2006, pages 3315 - 3322, XP019398952
- RUSINA, O.: 'Metal-enriched paper and its transformation to porous ceramics' KERAMISCHE ZEITSCHRIFT vol. 58, no. 5, 2006, pages 332 - 337, XP008183395
- SIEBER, H.: 'Biomimetic synthesis of ceramics and ceramic composites' MATER. SCI. ENG., A vol. 412, no. 1-2, 2005, pages 43 - 47, XP027791556
- TRAVITZKY, N. ET AL.: 'Preceramic paper-derived ceramics' J. AM. CERAM. SOC. vol. 91, no. 11, 2008, pages 3477 - 3491, XP002602625
- None

## Description

### Field of the invention

The present invention relates to a process for producing a web formed composite material with a high ash content and a composite produced by the process

### Background

Extrusion technologies and injection molding are widely used to form products of a variety of shapes and for several different end-uses. Commonly extruded materials include metals, polymers, ceramics and concrete. In an extrusion process, the stock material is squeezed in a die by using a mechanical or hydraulic press. However, there are some disadvantages connected to the extrusion molding process; e.g. unpredictable size variances of the extruded products and limitations on the kinds and dimensions of products that can be produced in the process. Moreover, these prior art processes for forming products usually require pre-treatment of the raw materials, high process temperatures and have limited production capacities.

Today's demand on fast, short and flexible product lines has contributed to the development of new manufacturing techniques. One such example is laminated object manufacturing (LOM), which is a 3D printing method wherein layers of a web-formed material are successively glued together and cut to a pre-determined shape. In the use of this, and similar kinds of techniques, a web-formed material comprising a high amount of inorganic material is desirable. Also the production of ceramic articles made from preceramic paper or board demands a web-formed structure with a high amount of inorganic materials.

In the art, attempts of producing web-formed structures comprising fibres and a high amount of inorganic materials have been made. US20090011208 discloses a method to produce preceramic papers or board with a high content of ceramic fillers. The method disclosed in US20090011208 involves dosing of ceramic fillers to the wet-end. This may result in problems with filler retention, process runnability and an uneven distribution of the ceramic fillers in z-direction. Another problem is that ceramic particles are usually very abrasive and therefore cause wear on machine parts.

RAMBO, C, "Manufacturing of cellular β-SiALON/β-SiC composite ceramics from cardboard", J. Mater. Sci, 2006, vol. 41, no. 11, s. 3315-3322, ISSN 0022-2461 discloses a method of manufacturing ceramic materials by dip-coating of corrugated board in a metal-powder slurry.

D6: WO2012062424 A2 discloses a ceramic structure which is made from several layers pre-ceramic paper.

D7: JP2007197888 discloses a coated paper suitable for offset printing. The paper comprises a coating comprises a binder and a pigment, which pigment is made from particle aggregates produced by using deinked floss discharged from a paper-waste treating process.

Another kind of a web-formed structure with a high mineral content is stone paper, which is manufactured from calcium carbonate mixed with a high density polyethylene bonding agent. However, the stone paper production process may involve limitations on the sizes and forms of the produced product. Moreover, the minerals in stone paper are integrated in a non-renewable, fossil oil based thermoplastic material layer. The use of stone paper is further limited for certain applications since stone paper comprises non-toxic photodegradable polyethylene resins, which degradates when exposed to sun light. As mentioned above, the thermoplastic matrix is also sensitive to high and low temperatures, since operating outside a pre-determined temperature window reduces its mechanical performance.

The mixing of high amounts of minerals into small amounts of a thermoplastic polymer is from a practical point of view difficult and the obtained mixture is hard to extrude. The addition of a reinforcement agent, such as a fiber, might improve the mechanical properties but usually the amounts of fillers and fibers in a thermoplastic material are very low.

Thus, there remains a need for a process to produce a web-formed structure comprising fibers and a high amount of inorganic material.

### Summary of the invention

It is an object of the present invention to provide a moldable, web-formed composite comprising fibers and a high amount of inorganic materials.

This object and other advantages are achieved by the process according to claim 1.

The present invention relates to a process for producing a web formed composite in a paper machine, which composite exhibits an ash content of more than 70 wt%, said method comprising the steps of; providing a web-formed base substrate with a basis weight of 30 - 70 gsm comprising cellulose fibers, and coating said base substrate with coating compositions comprising pigment materials of more than 50 wt%, preferably of more than 60 wt% or more preferably more than 70 wt%, by weight in at least a first and a second coating step, so that at least two successive layers of coating is applied to said base substrate.

The process of the invention enables the production of a web-formed composite with a high mineral content in a fast and cost-efficient manner. The reinforcement base substrate provides the composite with mechanical strength. It has surprisingly been found that use of multiple coating in accordance with the invention makes it possible to produce a web formed composite with an ash content of more than 70%, preferably of more than 80% or even more preferably of more than 90 % by weight. The application of several successive layers enables a thick coating layer with a high mineral content to be built up on the substrate. Moreover, when coating the base substrate in several steps, in accordance with the invention, a coating composition with a high solid content can be used, whereby less drying of the composite is needed. This, in turn, leads to less energy consumption, less drying induced problems such as cracking and less problems with fine particle migration. The composite of the invention can be produced as a wide web, it may e.g. have a web width of up to 9 m.

The process may further comprise drying of said composite to a final moisture content of below 4%, preferably of below 3%. Drying to such low moisture content gives rise to a dimensional stable end-product. It further increases the water resistance of the product. The web is preferably dried in-between each additional coating step, which enhances the drying efficiency, the evenness of the coating structure and the runnability (drying capacity, blocking).

The coating steps are preferably performed off-line. In this context, the term "off-line coating" means coating that are physically separated from a web-forming machine (e.g. separated from a paper machine). By using off-line coating, an optimal number of coating layers may be applied onto the base substrate without the need to re-build existing machines.

The pigment material is preferably inorganic material and may, e.g., be selected from the group consisting of kaolin; ground or precipitated calcium carbonates; metal oxides; sulphate minerals such as alum stone, anhydrite, barite, gypsum; talcum, alumina, aluminum hydroxide, and mixtures thereof. In addition to the above mentioned pigment material, the composite may further comprise organic pigments, such as plastic pigment. The composition might also contain different functional pigments such as pearlescent pigments. The pigments may have a particle size in the nano scale range (nano pigments), e.g. a particle size of less than 200 nanometers.

The coating may be applied by the use of any available coating technique, including, but not limited to, blade coating, rod coating, curtain coating, spray coating, slot coating, immersion coating, gravure roll coating, reverse direct gravure coating and/or combinations thereof. The coating can also be applied in a printing press or in a 3D printing device. Preferably, the coating is applied by use of blade coating since this coating technique enables the application of high coat weight at sufficiently high coating speed.

The coating may be applied in more than three steps, preferably in more than five steps, even more preferably in six, seven or even eight steps. The application of several layers improves the control of the process. Moreover, it contributes to an efficient drying of the composite and enables running of the process at a high speed. The coating may be one-sided coating or double-sided coating.

The process of the invention enables each coating layer to be tailor made to optimize the properties of the end-product. It enables e.g. incorporation of different functionalities in one or several layers. The porosity of one applied coating layer may for instance differ from another applied coating layer.

In one embodiment of the invention, the porosity of the outermost applied coating layer is higher than the porosity of the innermost coating layer. In this way, the dense, innermost coating provides the composite with good barrier properties while the outermost, porous coating provides the composite with good printing properties.

In another embodiment of the invention, the porosity of the innermost coating layer may be higher than the porosity of the outermost coating layer. In this way, the dense, outermost coating provides the composite with a smooth surface finish while the innermost coating layer provides the composite with volume.

The difference in porosity between the applied layers may e.g. be achieved by calendering in between the coating steps. The process may e.g. comprise a step of calendering in between two successive coating steps, e.g. between the first and the second coating step.

Alternatively, or additionally, a difference in porosity, as well as other properties, may be accomplished by use of coating compositions comprising different type of pigment materials. This may, e.g., be accomplished by use of pigment materials with different mean particle sizes or different particle size distribution in each coating step. In one mode, the coating composition applied in one of the coating steps comprises a first type of pigment material and the coating composition applied in another coating step comprises a second type of pigment material that differs from said first type of pigment material. Said first type of pigment material may, e.g., comprise more than 70 % by weight of fine pigments, such as calcium carbonate and/or days, with a spherical diameter of less than 5 microns and/or plate-like pigments such as talcum and the second type of pigment material may comprise more than 70% by weight of coarse pigments, such as silica, bentonite and/or PCC, with a spherical diameter of more than 5 microns.

Different properties between the coating layers may also be achieved by use of different amount of binders in the coating compositions. The first coating step may comprise applying a first coating composition comprising a first amount of binder (calculated as parts per hundred by weight, based on the weight of dry pigment), and the second coating step may comprise applying a second coating composition comprising a second amount of binder, which second amount of binder differs from said first amount of binder. Said first coating composition may e.g., comprise less than 6 pph binder by weight, based on the weight of dry pigment, and said second coating composition may e.g. comprise more than 6 pph binder by weight, based on the weight of dry pigment. By setting the binder amount higher or lower, the cohesive strength within the coating layer and the hydrophobicity of the composite can be adjusted. By applying more binder, calculated as part per pigment weight, in one coating layer, a denser coating layer is achieved.

The invention further relates to the use of reject sludge from a waste paper cleaning process for the production of a web-formed composite with high ash content. Pigment materials from reject sludge from a waste paper cleaning process may be fractionated and then applied in the coating of the base substrate or added as fillers in the base substrate. The recycling of pigment minerals from reject sludge renders the production process environmental friendly, sustainable, more CO2 neutral, and involves savings in raw material costs. The pigment material may further or alternatively comprise fly ash and/or pigment reject.

In one embodiment, only one of the coating layers comprises pigment materials from reject sludge. The process of the invention may e.g. comprise a first coating step wherein a coating composition comprising pigment materials from reject sludge is applied onto a base substrate and a second coating step wherein a coating composition comprising fresh pigment materials is applied onto the first layer. By applying a second coating layer comprising fresh pigment materials onto the first layer, the surface properties of the thus produced composite are more predictable.

The base substrate used in the process of the invention may comprise fine fiber fraction to 50%, preferably 60% and more preferably 80%, by weight as calculated on the total amount fibers in said base substrate. In one embodiment, the base substrate comprises at least 70 %, preferably at least 80%, by weight of nanofibrillated fibers, preferably microfibrillated cellulose (MFC), calculated on the total amount of fibers in said base substrate. The use of fine fibers, or nanofibrillated fibers, such as MFC, reduces the porosity of the base substrate, which could be an advantage in several possible end-uses of the composite. Moreover, the large amount of these kinds of fibers renders the composite dense, strong and improves the reinforcement of the high mineral content composite.

The invention further relates to a web based composite (which may be produced in the process), which composite has an ash content of more than 70% by weight. The composite of the invention comprises base substrate with a basis weight of 30 - 70 gsm, which base substrate comprises cellulose fibers, and at least two, successive coating layers coated onto said base substrate, said coating layers comprising more than 50 wt% of pigment materials.

The inventive composite has preferably a moisture content of less than 4%, preferably less than 3%. It may further have a density of between 1.1-3 kg/m³, preferably of between 1.2-2 kg/m³, and most preferably between 1.3 - 1.7 kg/m³ for calendered and uncalendered composites. The composite of the invention may further exhibit a Cobb (w, 60sec) value below 10 g/m², preferably below 8 g/m² and most preferably below 6 g/m². This gives rise to a web-formed composite with a high mineral content, which composite is mouldable, embossable, strong, non-dissolvable in water and has a high fire and weather resistance. The obtained product is also sustainable and can be recycled.

### Detailed description

The invention relates to a process for producing a web formed composite with an ash content of more than 70% by weight, preferably more than 80% and even more preferably 90% or even more than 95% by weight. The composite produced in accordance with the inventive is moldable, web-formed and has a very high inorganic content which render it useful for the production of a number of different products, including but not limited to printed electronics, heat exchangers, construction elements, reinforcement elements, diaphragms in chemical reactors, as carrier for catalysts and osmosis applications amongst others. The composite can e.g. advantageously be used as a composite for 3D printing/laminated object manufacturing. It may, e.g., be sheeted and several sheeted composites may be laminated onto each other and formed to products of different shapes and for different end uses. Moreover, the composite may be further processed by use of techniques conventionally used for forming objects of paper and/or board. The thus formed object may thereafter be ignited to burn off the organic material (e.g. the fibers). It may further be sintered to from a hard and dense object. If the pigment material added in the coating includes ceramic minerals, a ceramic material may be produced from the composite. The inventive, web-formed composite may be winded by use of core winding techniques traditionally used for forming paper cores, in order to form a layered, tube-formed structure. If the web-formed composite comprises ceramic minerals, said tube may be sintered to form a ceramic tube.

The web-formed base-substrate is preferably formed by use of technologies normally used in the manufacturing of paper, such as wet web formation. The composite may e.g. be produced in a paper machine.

The base substrate comprises cellulose fibers (reinforcement fibers). The base substrate, comprising said reinforcement fibers, provides the composite with mechanical strength. The base substrate has a weight of 30 - 70 gsm. The use of a base substrate with a lower weight may reduce the risk for delamination. The base substrate may further comprise fillers and suitable additives. In one embodiment, the base substrate comprises less than 30% by weight of fillers. Such low amount of fillers creates a porous inner layer, which improves thickness and strength properties of the composite. In another embodiment, the base substrate may comprise more than 30%, preferably more than 50%, by weight of fillers. This enables the production of a web-formed material with an even higher amount of inorganic material. The fillers may be selected from the group consisting of kaolin; ground or precipitated calcium carbonates; metal oxides; sulphate minerals such as alum stone, anhydrite, barite, gypsum; talcum, aluminum hydroxide, silica, nanoclays such as bentoinite, montomorillonite, smectites, and mixtures thereof. The filler may further, or alternatively, comprise reject sludge from a waste paper cleaning process, fly ash and/or pigment reject.

The base substrate may further comprise a large amount of fine fiber fraction. As used herein, the fine fiber fraction is defined as the fraction of the fibers that passes through a 200 mesh screen. The base substrate may further comprise at least 70 %, or preferably at least 80% or 90% by weight of nanofibrillated fibers, preferably microfibrillated cellulose, calculated on the total amount of fibers in said base substrate.

As used herein the term "nanofibrillated polysaccharide" includes bacterial cellulose or nanocellulose spun with either traditional spinning techniques or with electrostatic spinning. In these cases, the material is preferably a polysaccharide but not limited to solely a polysaccharide. A polysaccharide can be e.g. starch, protein, cellulose derivatives etc. Also microfibrillated cellulose as defined more in detail below is included in this definition. The microfibrillated cellulose (MFC) is also known as nanocellulose. It is a material typically made from wood cellulose fibers, from both hardwood or softwood fibers. It can also be made from microbial sources, e.g. seaweed fermented fibers, agricultural fibers such as wheat straw pulp, bamboo or other non-wood fiber sources. In microfibrillated cellulose the individual microfibrils have been partly or totally detached from each other. A microfibrillated cellulose fibril is normally very thin (e.g. a width of 5-200 nm) and the length is often between 100 nm to 10 µm. However, the microfibrils may also be longer, for example between 10-200 µm, even lengths of 2000 µm can be found due to wide length distribution. Fibers that have been fibrillated and which have microfibrils on the surface and microfibrils that are separated and located in a water phase of a slurry are included in the definition of MFC. Furthermore, cellulose whiskers, microcrystalline cellulose (MCC), microcellulose (MC), nanocrystalline cellulose (NCC), nanofibrillated cellulose (NFC) or regenerated cellulose fibers and particles are also included in the definition of MFC.The fibrils may also be polymer coated fibrils, i.e. a modified fibril either chemically or physically, being thus either hydrophilic or hydrophobic.

Preferably, the base substrate has low moisture content, e.g. a moisture content of below 3%.

In accordance with the invention, the base substrate is coated with a coating composition comprising a high amount of pigment materials in several steps, resulting in several successive coating layers. The coating composition may comprise pigment materials to more than 50%, or preferably more than 60% or even more than 70%, 80 % or 90 % by weight. The coating composition may be applied at 20 gsm per layer, preferably at more than 30 gsm or even more preferably at 40 gsm per layer. The coating can be applied by use of any available coating technique. Preferably, the coated web is dried in between each coating step. The base substrate may be coated on only one side, or on both sides (double-sided coated) with the same or different number of layers. Double-sided coating is preferred in order to prevent curl.

The composite produced in the method has a high mineral content, it may have low moisture content, high density and may exhibit a low Cobb (w, 60 sec) value which renders stable in moist environments.

The method for measuring the Cobb (w, 60 sec) value, both with reference to the appended claims and in the measurement performed in the example below, is Cobb, water, 60 sec, average of TS + BS, in accordance with ISO 535:1991, conditioning atmosphere: 23°C, 50%RH.

The ash content, both with reference to the appended claims and in the measurement performed in the example below, refers to the material remaining, calculated on the basis of the dry weight of the original sample, after the sample is ignited at 525 °C (ISO1762).

The invention is described in more details by way of an example below. It is to be understood that the invention is not limited to the particular process steps and materials disclosed herein.

### Example

The base substrate used in the example was made from 100% softwood pulp, refined at 12 kWh/kg to a beating degree of 24 °SR. Further details of the base substrate used can be seen in table 1.

**Table 1**

| | |
|---|---|
| Base filler content [%] | 24 |
| AKD Sizing [l/m] | 3 |
| Wet end starch [%] | 1 |
| Basis weight [g/m²] | 64.7 |
| Moisture content [%] | 2.2 |

Said base substrate was double-sided coated using blade coating with jet and roll application in three coating steps, forming three successive coating layers on each side of the substrate. The base substrate was coated with a coating composition comprising 100 parts fine ground calcium carbonate (55 - 65 % below 2µm) and 10 parts SB latex binder. The coating was applied in an amount of 139 g/m² on each side of the substrate web. The web was dried with IR and air blow after each additional coating step. The pre-coating layers were dried to a moisture content of 3% while the final top coating layer was dried to a moisture content of 4.5%.

**Table 2**

| **Parameter** | **Composite** |
|---|---|
| Ash content [%] | 83 |
| Grammage [g/m²] | 290 |
| Thickness [µm] | 193 |
| Bulk [cm³/g] | 0.7 |
| Density [kg/m²] | 1.501 |
| Permeability (Bendtsen) [ml/min] | 1 |
| Cobb Oil 10 sec, Average of TS+BS [g/m²] | 5 |
| Cobb Water 60 sec, Average of TS + BS [g/m²] | 5 |
| Smoothness 75 (Bendsten), average of TS+ BS [ml/min] | 7 |
| Smoothness Parker Print Surface, Average of TS + BS [µm] | 1.27 |
| Gloss Lehmann 75°, Average of TS + BS | 11.3 |
| Gloss Hunter 75°, Average of TS + BS | 18.2 |
| Tensile Index MD [kNm/kg] | 18.9 |
| Tensile Index, CD [kNm/kg] | 9.3 |
| Stretch, MD [%] | 1.8 |
| Stretch, CD [%] | 4.6 |
| E-Modulus, MD [N/mm²] | 5.431 |
| E-Modulus, CD [N/mm²] | 4.394 |

Table 2 summarizes the properties of the thus produced web-formed composite. As can be seen in the table, the produced, web-formed composite exhibits high ash content, a quite high density and low water absorption which render the composite strong, fire resistant and stable in moist environments. Said web-formed composite may, as mentioned above, be calendered and/or further converted depending on the desired end-use.

## Claims

1. A process for producing a web formed composite in a paper machine, which composite exhibits an ash content of more than 70% by weight, said method comprising the steps of;
- providing a web-formed base substrate with a basis weight of 30 - 70 gsm comprising cellulose fibers,
- coating said base substrate with coating compositions comprising pigment material to more than 50% by weight in at least a first and a second coating step, so that at least two successive layers of coating is applied to said base substrate.

2. A process according to claim 1, further comprising a step of drying in between the successive coating steps.

3. The process according to any one of claims 1 - 2, comprising drying said coated base substrate to a moisture content of below 4%, preferably of below 3%.

4. The process according to any one of claims 1 - 3, wherein the coating steps are performed off-line.

5. The process according to any one of claims 1 - 4, wherein the pigment material is selected from the group consisting of kaolin; ground or precipitated calcium carbonates; metal oxides; sulphate minerals such as alum stone, anhydrite, barite, gypsum; talcum, aluminum hydroxide, silica, nanoclays such as bentoinite, montomorillonite, smectites, and mixtures thereof.

6. The process according to any one of claims 1 - 5, wherein the step of coating comprises coating the base substrate in at least five steps, so that at least five successive layers of coating is applied to said base substrate.

7. The process according to any one of claims 1 - 6, wherein the porosity of one of the applied coating layers differs from the porosity of another applied coating layer.

8. The process according to claim 7, wherein the porosity of the outermost coating layer is higher than the porosity of the innermost coating layer.

9. The process according to claim 7, wherein the porosity of the innermost coating layer is higher than the porosity of the outermost coating layer.

10. The process according to any one of claims 1 - 9, comprising a step of calendering in between said first and second coating step.

11. The process according to any one of claims 1 - 10, wherein the coating composition applied in one of the coating steps comprises a first type of pigment material and the coating composition applied in another coating step comprises a second type of pigment material that differs from said first type of pigment material.

12. The process according to any one of claims 1 - 11, wherein the first coating step comprises applying a first coating composition comprising a first amount of binders and the second coating step comprises applying a second coating composition comprising a second amount of binders, which second amount differs from said first amount.

13. The process according to any one of claims 1 - 12, wherein at least one of the coating steps comprises applying a coating composition, which coating composition comprises pigment materials from reject sludge from a waste paper cleaning process.

14. The process according to any one of claims 1 - 13, wherein said base substrate comprises fillers comprising reject sludge from a waste paper cleaning process.

15. The process according to any one of claims 1 - 14, wherein the base substrate comprises fine fiber fraction to 50% by weight as calculated on the total amount of fibers in said base substrate.

16. The process according to any one of claims 1 - 15, wherein the base substrate comprises at least 70 %, preferably at least 80%, by weight of nanofibrillated fibers, preferably microfibrillated cellulose, calculated on the total amount of fibers in said base substrate.

17. A web based composite with an ash content of more than 70 % by weight produced by the process according to any one of claims 1 - 16, said composite comprising:
- a web-formed base substrate with a basis weight of 30 - 70 gsm, comprising cellulose fibers
- at least two, successive coating layers coated applied onto said base substrate, said coating layers comprising more than 50% of pigment materials.

18. A web based composite according to claim 17, which composite has a moisture content of less than 4 %, preferably less than 3%.

19. A web based composite according to any one of claims 17 and 18, wherein the composite has a density of between 1.1 - 3 kg/m³, preferably of between 1.2 - 2 kg/m³, most preferably of between 1.3 - 1-7 kg/m³

20. A web based composite according to any one of claims 17 - 19, wherein the composite exhibits a Cobb (w, 60 sec) value below 10 g/m², preferably below 8 g/m² and most preferably below 6 g/m².

## Patentansprüche

1. Verfahren zur Herstellung eines bahnförmigen Verbundstoffs in einer Papiermaschine, wobei der Verbundstoff einen Aschegehalt von mehr als 70 Gew.-% aufweist, besagtes Verfahren umfassend die folgenden Schritte;
- Bereitstellen eines bahnförmigen Basissubstrats mit einem Basisgewicht von 30 bis 70 g/m², das Cellulosefasern umfasst,
- Beschichten des Basissubstrats mit Beschichtungszusammensetzungen, die Pigmentmaterial zu mehr als 50 Gew.-% umfassen, in zumindest einem ersten und einem zweiten Beschichtungsschritt, sodass zumindest zwei aufeinanderfolgende Schichten der Beschichtung auf das Basissubstrat aufgebracht werden.

2. Verfahren nach Anspruch 1, ferner umfassend einen Schritt des Trocknens zwischen den aufeinanderfolgenden Beschichtungsschritten.

3. Verfahren nach einem der Ansprüche 1 bis 2, umfassend das Trocknen des besagten beschichteten Basissubstrats auf einen Feuchtigkeitsgehalt von unter 4 %, vorzugsweise unter 3 %.

4. Verfahren nach einem der Ansprüche 1 bis 3, wobei die Beschichtungsschritte abseits vom Band durchgeführt werden.

5. Verfahren nach einem der Ansprüche 1 bis 4, wobei das Pigmentmaterial ausgewählt ist aus der Gruppe bestehend aus Kaolin; gemahlenen oder gefällten Calciumcarbonaten; Metalloxiden; Sulfatmineralien wie Alaunstein, Anhydrit, Barit, Gips; Talkum, Aluminiumhydroxid, Siliciumdioxid, Nano-Tonerde wie Bentoinit, Montomorillonit, Smektiten und Gemischen davon.

6. Verfahren nach einem der Ansprüche 1 bis 5, wobei der Schritt des Beschichtens das Beschichten des Basissubstrats in mindestens fünf Schritten umfasst, sodass zumindest fünf aufeinanderfolgende Schichten der Beschichtung auf das Basissubstrat aufgebracht werden.

7. Verfahren nach einem der Ansprüche 1 bis 6, wobei sich die Porosität einer der aufgebrachten Beschichtungsschichten von der Porosität einer anderen aufgebrachten Beschichtungsschicht unterscheidet.

8. Verfahren nach Anspruch 7, wobei die Porosität der äußersten Beschichtungsschicht höher ist als die Porosität der innersten Beschichtungsschicht.

9. Verfahren nach Anspruch 7, wobei die Porosität der innersten Beschichtungsschicht höher ist als die Porosität der äußersten Beschichtungsschicht.

10. Verfahren nach einem der Ansprüche 1 bis 9, umfassend einen Schritt des Kalandrierens zwischen dem ersten und dem zweiten Beschichtungsschritt.

11. Verfahren nach einem der Ansprüche 1 bis 10, wobei die Beschichtungszusammensetzung, die in einem der Beschichtungsschritte aufgebracht wird, eine erste Art von Pigmentmaterial umfasst und die Beschichtungszusammensetzung, die in einem anderen Beschichtungsschritt aufgebracht wird, eine zweite Art von Pigmentmaterial umfasst, die sich von der ersten Art von Pigmentmaterial unterscheidet.

12. Verfahren nach einem der Ansprüche 1 bis 11, wobei der erste Beschichtungsschritt das Aufbringen einer ersten Beschichtungszusammensetzung umfasst, die eine erste Menge an Bindemitteln umfasst, und der zweite Beschichtungsschritt das Aufbringen einer zweiten Beschichtungszusammensetzung umfasst, die eine zweite Menge an Bindemitteln umfasst, wobei sich die zweite Menge von der ersten Menge unterscheidet.

13. Verfahren nach einem der Ansprüche 1 bis 12, wobei zumindest einer der Beschichtungsschritte das Aufbringen einer Beschichtungszusammensetzung umfasst, wobei die Beschichtungszusammensetzung Pigmentmaterialien aus Spuckstoffschlamm aus einem Altpapierreinigungsverfahren umfasst.

14. Verfahren nach einem der Ansprüche 1 bis 13, wobei das Basissubstrat Füllstoffe umfasst, die Spuckstoffschlamm aus einem Altpapierreinigungsverfahren umfassen.

15. Verfahren nach einem der Ansprüche 1 bis 14, wobei das Basissubstrat einen Feinfaseranteil bis 50 Gew.-%, berechnet auf die Gesamtmenge der Fasern in dem Basissubstrat, umfasst.

16. Verfahren nach einem der Ansprüche 1 bis 15, wobei das Basissubstrat zumindest 70 Gew.-%, bevorzugt zumindest 80 Gew.-% nanofibrillierte Fasern, bevorzugt mikrofibrillierte Cellulose, berechnet auf die Gesamtmenge der Fasern in dem Basissubstrat, umfasst.

17. Verbundwerkstoff auf Vliesbasis mit einem Aschegehalt von mehr als 70 Gew.-%, hergestellt durch das Verfahren nach einem der Ansprüche 1 bis 16, wobei der Verbundwerkstoff umfasst:
- ein bahnförmiges Basissubstrat mit einem Flächengewicht von 30 - 70 g/m², das Cellulosefasern umfasst
- zumindest zwei aufeinanderfolgende Beschichtungsschichten, die auf das Basissubstrat aufgetragen sind, wobei die Beschichtungsschichten mehr als 50 % Pigmentmaterialien umfassen.

18. Verbundwerkstoff auf Bahnbasis nach Anspruch 17, wobei der Verbundwerkstoff einen Feuchtigkeitsgehalt von weniger als 4 %, bevorzugt weniger als 3 %, aufweist.

19. Verbundwerkstoff auf Bahnbasis nach einem der Ansprüche 17 und 18, wobei der Verbundwerkstoff eine Dichte zwischen 1,1 und 3 kg/m³, bevorzugt zwischen 1,2 und 2 kg/m³, am meisten bevorzugt zwischen 1,3 und 1-7 kg/m³ aufweist.

20. Verbundwerkstoff auf Bahnbasis nach einem der Ansprüche 17 bis 19, wobei der Verbundwerkstoff einen Cobb-(w, 60 s)-Wert unter 10 g/m², bevorzugt unter 8 g/m² und am meisten bevorzugt unter 6 g/m² aufweist.

## Revendications

1. Un procédé de production d'un composite en forme de bande dans une machine à papier, lequel composite présente une teneur en cendres de plus de 70 % en poids, ledit procédé comprenant les étapes de ;
- fourniture d'un substrat de base en forme de bande avec un poids de base de 30 à 70 g/m2 comprenant des fibres de cellulose,
- revêtement dudit substrat de base avec des compositions de revêtement comprenant un matériau de pigment dans une proportion supérieure à 50 % en poids dans au moins une première et une deuxième étape de revêtement, de sorte qu'au moins deux couches successives de revêtement soient appliquées audit substrat de base.

2. Un procédé selon la revendication 1, comprenant en outre une étape de séchage entre les étapes de revêtement successives.

3. Le procédé selon l'une quelconque des revendications 1 à 2, comprenant le séchage dudit substrat de base revêtu jusqu'à une teneur en humidité inférieure à 4 %, de préférence inférieure à 3 %.

4. Le procédé selon l'une quelconque des revendications 1 à 3, dans lequel les étapes de revêtement sont effectuées hors ligne.

5. Le procédé selon l'une quelconque des revendications 1 à 4, dans lequel le matériau de pigment est choisi dans le groupe constitué par le kaolin ; les carbonates de calcium broyés ou précipités ; les oxydes métalliques ; les minéraux sulfates tels que la pierre d'alun, l'anhydrite, la baryte, le gypse ; le talc, l'hydroxyde d'aluminium, la silice, les nanoargiles telles que la bentonite, la montomorillonite, les smectites et leurs mélanges.

6. Le procédé selon l'une quelconque des revendications 1 à 5, dans lequel l'étape de revêtement comprend le revêtement du substrat de base en au moins cinq étapes, de sorte qu'au moins cinq couches successives de revêtement soient appliquées audit substrat de base.

7. Le procédé selon l'une quelconque des revendications 1 à 6, dans lequel la porosité d'une des couches de revêtement appliquées diffère de la porosité d'une autre couche de revêtement appliquée.

8. Le procédé selon la revendication 7, dans lequel la porosité de la couche de revêtement la plus à l'extérieur est supérieure à la porosité de la couche de revêtement la plus à l'intérieur.

9. Le procédé selon la revendication 7, dans lequel la porosité de la couche de revêtement la plus à l'intérieur est supérieure à la porosité de la couche de revêtement la plus à l'extérieur.

10. Le procédé selon l'une quelconque des revendications 1 à 9, comprenant une étape de calandrage entre lesdites première et deuxième étapes de revêtement.

11. Le procédé selon l'une quelconque des revendications 1 à 10, dans lequel la composition de revêtement appliquée dans l'une des étapes de revêtement comprend un premier type de matériau de pigment et la composition de revêtement appliquée dans une autre étape de revêtement comprend un second type de matériau de pigment qui diffère dudit premier type de matériau de pigment.

12. Le procédé selon l'une quelconque des revendications 1 à 11, dans lequel la première étape de revêtement comprend l'application d'une première composition de revêtement comprenant une première quantité de liants et la deuxième étape de revêtement comprend l'application d'une seconde composition de revêtement comprenant une seconde quantité de liants, laquelle seconde quantité diffère de ladite première quantité.

13. Le procédé selon l'une quelconque des revendications 1 à 12, dans lequel au moins l'une des étapes de revêtement comprend l'application d'une composition de revêtement, laquelle composition de revêtement comprend des matériaux de pigment provenant de boues de rejet provenant d'un procédé de nettoyage de vieux papiers.

14. Le procédé selon l'une quelconque des revendications 1 à 13, dans lequel ledit substrat de base comprend des charges comprenant des boues de rejet provenant d'un procédé de nettoyage de vieux papiers.

15. Le procédé selon l'une quelconque des revendications 1 à 14, dans lequel le substrat de base comprend une fraction de fibres fines à 50 % en poids, calculée sur la quantité totale des fibres dans ledit substrat de base.

16. Le procédé selon l'une quelconque des revendications 1 à 15, dans lequel le substrat de base comprend au moins 70 %, de préférence au moins 80 %, en poids de fibres nanofibrillées, de préférence de la cellulose microfibrillée, calculés sur la quantité totale des fibres dans ledit substrat de base.

17. Un composite à base de bande ayant une teneur en cendres de plus de 70 % en poids, produit par le procédé selon l'une quelconque des revendications 1 à 16, ledit composite comprenant :
- un substrat de base en forme de bande avec un poids de base de 30 à 70 g/m2, comprenant des fibres de cellulose
- au moins deux couches de revêtement successives appliquées audit substrat de base, lesdites couches de revêtement comprenant plus de 50 % de matériaux de pigment.

18. Un composite à base de bande selon la revendication 17, lequel composite a une teneur en humidité inférieure à 4 %, de préférence inférieure à 3 %.

19. Un composite à base de bande selon l'une quelconque des revendications 17 et 18, dans lequel le composite a une densité comprise entre 1,1 et 3 kg/m³, de préférence entre 1,2 et 2 kg/m³, le plus préférablement entre 1,3 et 1-7 kg/m³.

20. Un composite à base de bande selon l'une quelconque des revendications 17 à 19, dans lequel le composite présente une valeur de Cobb (w, 60 sec) inférieure à 10 g/m², de préférence inférieure à 8 g/m² et le plus préférablement inférieure à ⁶ g/m².
